# EUROPEAN PATENT APPLICATION

(11) **EP 4 730 476 A1**
(43) Date of publication of application: **22.04.2026**
(21) Application number: 24206958.1
(22) Date of filing: 16.10.2024
(51) Int. Cl.: H01M 10/42, B60L 58/18, H01M 10/52, H01M 50/30, H01M 50/358, H01M 50/367, H01M 50/375, B60L 58/26, B60L 50/16, B60T 13/26, H01M 10/48, H01M 10/613, H01M 10/625

(54) **BATTERY SYSTEM FOR A VEHICLE**

(71) Applicant: Volvo Truck Corporation, 405 08 Göteborg (SE)
(72) Inventor: MCCARTHY, Benjamin, ÅSA (SE); AHMED, Istaq, GÖTEBORG (SE); GISKE, Gustav, JOHANNESHOV (SE)
(74) Representative: Ström & Gulliksson AB

(57) **Abstract**

Present disclosure relates to a battery system comprising a battery pack comprising an inlet and an outlet connected to the inlet, the battery system further comprising a controllable pressure reducing device connected to the outlet of the battery pack for decreasing the internal pressure of the battery pack by controlling the gas discharge from the battery pack through the outlet.

## Description

### TECHNICAL FIELD

The disclosure relates generally to battery systems. In particular aspects, the disclosure relates to a battery system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Battery systems are critical components in a wide range of applications, from electric vehicles to renewable energy storage solutions. Ensuring the reliability, longevity, and safety of these systems is paramount. One of the persistent challenges faced by battery systems is the accumulation of unwanted particles, moisture, and byproducts of thermal runaway events within the battery pack. These contaminants can severely impact the performance, safety, and lifespan of the battery.

Current solutions in the industry have several limitations. For instance, many battery systems lack effective mechanisms for removing particulate matter and moisture that inevitably enter the battery pack over time. This accumulation can lead to a range of issues, including reduced efficiency, increased internal resistance, and potential short-circuiting. Moreover, during thermal runaway events, hazardous gases and particles are produced, which can compromise the safety of the entire system if not properly managed.

Existing battery packs generally rely on passive methods for dealing with these contaminants, such as simple filters or one-time seals. However, these approaches are often inadequate in fully addressing the problem. Filters can become clogged and lose effectiveness, while seals may degrade over time, allowing contaminants to re-enter the system. Additionally, these methods do not provide a way to actively manage and control the internal environment of the battery pack, particularly during critical events like thermal runaway.

Another significant drawback of current technologies is their inability to perform diagnostic checks in the field. Negative pressure tests, which are often only possible in controlled environments during the initial manufacturing stage. This limitation hinders the ability to conduct maintenance and ensure the ongoing reliability of battery systems in real-world conditions.

In summary, there is a clear need for solutions for enhancing the safety and performance of battery systems but also enable more comprehensive field diagnostics and maintenance capabilities.

### SUMMARY

According to a first aspect of the disclosure, a battery system is provided. The battery system comprises a battery pack comprising an inlet and an outlet connected to the inlet, the battery system further comprising a controllable pressure reducing device connected to the outlet of the battery pack for decreasing the internal pressure of the battery pack by controlling the gas discharge from the battery pack through the outlet. The first aspect of the disclosure may seek to achieve a battery system with enhanced safety and longevity. A technical benefit may include that the battery system can be controlled to effectively manage internal pressure and/or to remove unwanted particles and moisture from the battery pack.

Optionally in some examples, including in at least one preferred example, the battery system may further comprise processing circuitry configured to control the internal pressure of the battery pack. A technical benefit may include improved automated control over the internal pressure of the battery pack and/or removal of unwanted particles or moisture from the battery pack, enhancing system reliability.

Optionally in some examples, including in at least one preferred example, the processing circuitry may be configured to control the internal pressure to decrease responsive to identifying a gas discharging trigger event. A technical benefit may include timely and efficient response to potential situations where unwanted particles, gases or moisture etc. has accumulated in the battery pack.

Optionally in some examples, including in at least one preferred example, the gas discharging trigger event may comprise a gas discharging instruction initiated by an operator. A technical benefit may include providing manual control options for operators to address specific situations or perform service of the battery pack, increasing system flexibility.

Optionally in some examples, including in at least one preferred example, the battery system may further comprise one or more battery pack sensors operatively connected to the processing circuitry and configured to monitor one or more parameters relating to the battery pack, wherein the processing circuitry may be configured to obtain sensor data from the one or more battery pack sensors and identify a gas discharging trigger event based on a value of the sensor data exceeding a threshold value. A technical benefit may include enhanced monitoring and automated response capabilities, improving overall system safety and performance.

Optionally in some examples, including in at least one preferred example, the one or more battery pack sensors may comprise one or more of a thermal runaway sensor, a temperature sensor, a pressure sensor, and a moisture sensor. A technical benefit may include comprehensive sensor coverage for various potential issues within the battery pack, allowing for automatic control of the gas discharge from the battery pack based on a certain parameter. For example, a technical benefit may include accommodating for automatic accelerated initialization of evacuation of gas and/or particles stemming from a thermal runaway.

Optionally in some examples, including in at least one preferred example, the controllable pressure reducing device may be configured to decrease the internal pressure in the battery pack by evacuating thermal runaway gas in the event of a thermal runaway in said battery pack. A technical benefit may include improved management of hazardous gases during thermal runaway events, enhancing safety and/or mitigating risk for the damage on the components of the battery pack accumulating.

Optionally in some examples, including in at least one preferred example, the battery system may further comprise a compressed air supply connected to the inlet. A technical benefit may include providing a reliable source of compressed air for various operational needs of the battery system.

Optionally in some examples, including in at least one preferred example, the compressed air supply may be connectable to an air-controlled brake system of a vehicle. A technical benefit may include leveraging existing vehicle air supply systems, reducing the need for additional components.

Optionally in some examples, including in at least one preferred example, the battery system may further comprise a pressure reducing valve arranged between the inlet of the battery pack and the compressed air supply. A technical benefit may include precise control over the air pressure supplied to the battery pack, optimizing system performance.

Optionally in some examples, including in at least one preferred example, the battery system may be further configured to operate in a raised pressure operational mode wherein the battery system may be configured to control the internal pressure of the battery pack to be greater than the ambient air pressure. A technical benefit may include increasing a lifetime of the battery back and reducing a risk that flammable contaminants enter the battery pack causing smoke or even fires.

Optionally in some examples, including in at least one preferred example, the battery pack may further comprise a pressure relief valve configured to open responsive to the internal pressure of the battery pack being above a pressure relief threshold, and the battery system is configured to control the internal pressure of the battery pack to be below the pressure relief threshold. A technical benefit may include preventing overpressure conditions, enhancing safety and preventing damage on the battery pack.

Optionally in some examples, including in at least one preferred example, the pressure relief valve may be a pressure operated safety valve configured to open at the pressure relief threshold. A technical benefit may include automatic pressure relief during overpressure conditions, improving system safety.

Optionally in some examples, including in at least one preferred example, the outlet may be arranged at a, during use, vertically lower portion of the battery pack to allow draining of moisture from the battery pack, the vertically lower portion being located at a, during use, bottom half of the battery pack. A technical benefit may include enabling a controlled evacuation (release) of not only air from the battery pack, but also any liquid accumulated (from e.g. condensation) inside the battery pack.

Optionally in some examples, including in at least one preferred example, the battery pack may be a liquid-cooled battery pack. A technical benefit may include enhanced thermal management, improving battery performance and lifespan.

Optionally in some examples, including in at least one preferred example, wherein the controllable pressure reducing device may comprise a venturi valve connected to the outlet and configured to be driven by a compressed air source to reduce the internal pressure of the battery pack. A technical benefit may include efficient pressure reduction using a reliable and simple mechanism.

Optionally in some examples, including in at least one preferred example, the venturi valve may be connected to the compressed air supply and configured to be driven by said compressed air supply to reduce the internal pressure of the battery pack. A technical benefit may include utilizing existing compressed air sources for pressure reduction, simplifying system design.

Optionally in some examples, including in at least one preferred example, the battery system may further comprise an inlet control valve arrangement configured to control the flow into the inlet of the battery pack. A technical benefit may include precise control over the air intake, enhancing pressure management and system performance.

Optionally in some examples, including in at least one preferred example, the inlet control valve arrangement may be further configured to control the flow of gas to the venturi valve to control the internal pressure of the battery pack. A technical benefit may include integrated control over pressure reduction mechanisms, improving system efficiency.

Optionally in some examples, including in at least one preferred example, an inlet of the venturi valve may be connected to the control valve arrangement, an outlet of the venturi valve may be connected to an exhaust and a suction inlet of the venturi valve may be connected to the outlet of the battery pack. A technical benefit may include that a simple and non-complex manner of controlling the pressure reduction may be achieved.

Optionally in some examples, including in at least one preferred example, the battery system may further comprise a connecting branch connecting the inlet control valve arrangement and the controllable pressure reducing device, the inlet control valve arrangement being configured to operate in an intake state in which the inlet control valve arrangement is configured to enable flow into the battery pack, the inlet control valve arrangement being further configured to operate in a pressure reduction state wherein the inlet control valve arrangement is configured to enable flow to the controllable pressure reducing device to cause control of the controllable pressure reducing device for reducing the internal pressure of the battery pack. A technical benefit may include that discharge of gas may be performed in a simple and non-complex manner.

Optionally in some examples, including in at least one preferred example, the inlet control valve arrangement may comprises a three-way valve, wherein an inlet of the three-way valve is connected to the compressed air supply, a first outlet of the three-way valve is connected the inlet and a second outlet of the three-way valve is connected to the controllable pressure reducing device, wherein the three-way valve may be configured to connect the inlet and the first outlet in the intake state and the inlet and the second outlet in the pressure reduction state. A technical benefit may include efficient switching between intake and pressure reduction modes, improving system responsiveness and allowing for a system with a relatively low complexity.

Optionally in some examples, including in at least one preferred example, the battery system may further comprise processing circuitry configured to control the internal pressure of the battery pack, wherein the processing circuitry may be configured to control the internal pressure to decrease responsive to identifying a gas discharging trigger event, wherein the battery system further comprises one or more battery pack sensors operatively connected to the processing circuitry and configured to monitor one or more parameters relating to the battery pack, wherein the processing circuitry is configured to obtain sensor data from the one or more battery pack sensors and identify a gas discharging trigger event based on a value of the sensor data exceeding a threshold value, wherein the one or more battery pack sensors comprises one or more of a thermal runaway sensor, a temperature sensor and a pressure sensor and the controllable pressure reducing device is configured to decrease the internal pressure in the battery pack by evacuating thermal runaway gas in the event of the sensor data indicating a thermal runaway in said battery pack. A technical benefit may include comprehensive pressure management and safety mechanisms based on real-time data, enhancing the overall reliability and safety of the battery system.

According to a second aspect of the disclosure, a vehicle is provided. The vehicle comprises a battery system according to any of the examples described herein. The second aspect of the disclosure may seek to achieve a vehicle with a battery system with enhanced safety and longevity. A technical benefit may include that the battery system can be controlled to effectively manage internal pressure and/or to remove unwanted particles and moisture from the battery pack.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary schematic view of a vehicle according to an example.
**FIG. 2** is an exemplary schematic view of an air-controlled brake system according to an example.
**FIG. 3** is an exemplary schematic view of a battery system according to an example.
**FIG. 4** is an exemplary schematic view of a method according to an example.
**FIG. 5** is an exemplary schematic view of a computer program product according to an example.
**FIG. 6** is an exemplary schematic view of a computer program product being loaded onto processing circuitry according to an example.
**FIG. 7** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Battery packs are made up of battery cells, battery cells have a narrow ideal range of operational temperature to provide maximum performance and lifetime whilst ensuring safe use. To shield the batteries from the outside and safeguard their performance, the battery packs typically form sealed volumes. However, this may lead to accumulation of unwanted particles, moisture, and hazardous gases within the battery pack.

Further, as mentioned, battery cells generate heat during discharge and charge. To this end, battery packs are provided with a thermal management system to cool the battery pack down or heat the battery pack up in order to keep the battery pack within the ideal range of operational temperature. Most commonly on commercial vehicle battery application, is to use liquid coolant as the heat exchange medium. Liquid coolant is circulated inside the pack through a coolant circuit comprising of pipes, connectors, valves, heat exchangers, etc. The liquid coolant is, most commonly, made of a mix of glycol and pure water. As a result, the coolant may conduct electricity, so the contact of coolant with components under voltage may lead to short circuit and/or current leakage. Short circuit inside a battery pack is a safety issue as it may damage the battery cell. Therefore, the internal coolant circuit must be tight in order to prevent coolant leakage inside the battery pack. The safety issues may occur due to ingress of ambient water or dust. To this end a battery pack, specifically a battery pack of a vehicle, is generally substantially hermetically sealed to avoid contaminants from entering the battery pack.

Even with a substantially sealed system, e.g. liquid/moisture may, due to vibrations, cracks in a housing etc. be present within the battery pack even if a very complex and expensive seal is provided. Moisture may condense or reach a level where it interacts with electrical components of the battery pack risking undesired and unforeseen dangerous consequences. Such challenges may be addressed by increasing a strength and durability of the battery pack and/or by mounting the battery pack at a protected location to avoid damage and contaminants. However, such solutions are generally costly and may trade off efficiency and performance in order to reduce a risk of compromising the seal of the battery pack.

Another solution is to create areas within the battery pack where the moisture can accumulate wherefrom moisture may be provided to a drain. However, such solutions introduce unnecessary packaging constraints and inefficiencies.

During a so called thermal runaway, gases and particles will quickly accumulate inside the battery pack. There are presently solutions with release valves for emergency discharge triggered by for example the pressure or heat generated by the thermal runaway ripping or burning up a membrane thereby providing an opening for release of the pressure inside the battery pack. However, such valves are triggered late in the thermal runway process and allows for large amounts of particles to accumulate inside the battery pack.

The present disclosure will present a solution that is simple to implement and cost-efficient. The solution is implementable in a vehicle with only minor modifications required to sealing of battery packs and utilization of components and devices already available at the vehicle.

By controlling the gas discharge from the battery pack to decrease the internal pressure of the battery pack contaminants can be expelled in a simple and cost-efficient manner and thermal runaway gases and/or particles can be managed.

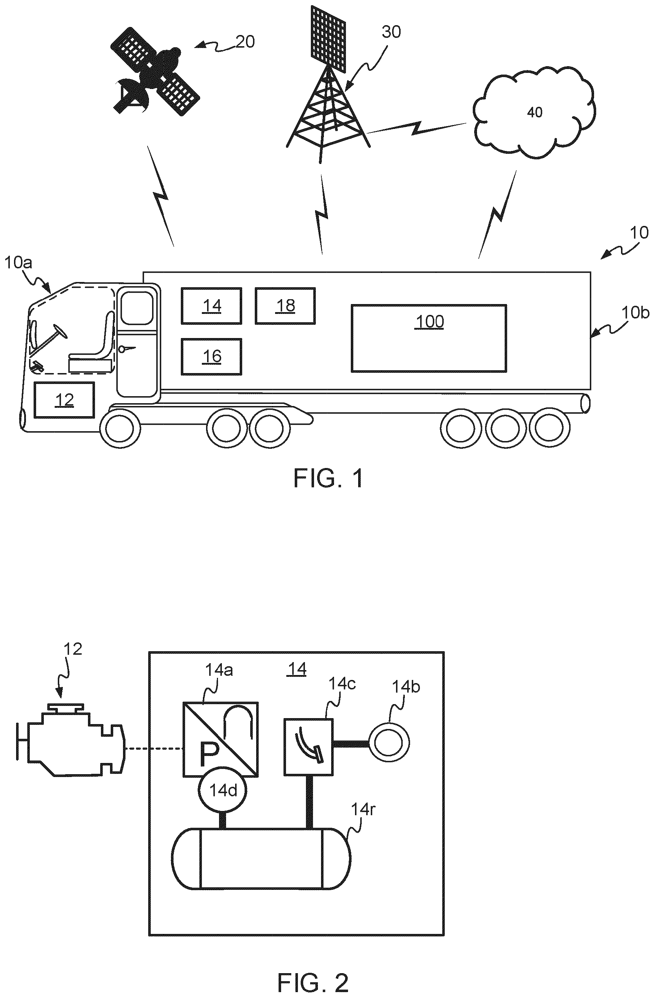

**FIG. 1** is an exemplary schematic side view of a heavy-duty vehicle **10** (hereinafter referred to as vehicle **10**) compatible with the teachings of the present disclosure. The vehicle **10** comprises a tractor unit **10a** which is arranged to tow a trailer unit **10b.** In other examples, other vehicles may be employed, e.g., trucks, buses, and construction equipment. The vehicle **10** comprises all vehicle units and associated functionality to operate as expected, such as a powertrain, chassis, and various control systems. The vehicle **10** comprises one or more propulsion sources **12.** The propulsion source **12** may be any suitable propulsion source **12** exemplified by, but not limited to, one or more or a combination of an electrical motor, a combustion engine such as a diesel, gas or gasoline powered engine. The vehicle **10** further comprises an energy source **100** suitable for providing energy for the propulsion source **12.** That is to say, if the propulsion source **12** is an electrical motor, a suitable energy source **100** would be a battery pack or a fuel cell. The vehicle **10** further comprises a brake system **14**, preferably an air-controlled brake system **14.** The vehicle **10** may further comprise sensor circuitry **16** arranged to detect, measure, sense or otherwise obtain data relevant for operation of the vehicle **10** including devices and systems connected to the vehicle **10.** The sensor circuit **16** may comprise one or more of an accelerometer, a gyroscope, a wheel Speed Sensor, an ABS sensor, a throttle position sensor, a fuel level sensor, a temperature Sensor, a pressure sensor, a rain sensor, a light sensor, proximity sensor, a lane departure warning sensor, a blind spot detection sensor, a TPMS sensor etc. Operational data relevant for operation of the vehicle **10** may include, but is not limited to, one or more of a speed of the vehicle **10**, a weight of the vehicle **10**, an inclination of the vehicle **10**, a status of the energy source **100** of the vehicle **10** (state of charge, fuel level etc.), a current speed limit of a current road travelled by the vehicle **10**, air-brake pressure etc. The vehicle **10** may further comprise communications circuitry **18** configured to receive and/or send communication. The communications circuitry **18** may be configured to enable the vehicle **10** to communicate with one or more external devices or systems such as a cloud server **40.** The communication with the external devices or systems may be directly or via a communications interface such as a cellular communications interface **30**, such as a radio base station. The cloud server **40** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **18** may, additionally or alternatively, be configured to enable the vehicle **10** to be operatively connected to a Global Navigation Satellite System (GNSS) **20** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **20** to determine a geographical location of the vehicle **10.**

As mentioned, the brake system **14** of the vehicle **10** is preferably an air-controlled brake system **14.** Air-controlled brake systems **14**, commonly known as air brake systems, are typically used in heavy-duty vehicles such as trucks, buses, and commercial vehicles. An exemplary air-controlled brake system **14** is shown in **FIG. 2****.** The air-controlled brake system **14** of **FIG. 2** operates using compressed air to control the application and release of brakes **14b** of the vehicle **10.** Air-controlled brake system **14** are commonly known and will not be excessively explained, but generally comprise, in addition to the brakes **14b** (brake actuators comprising brake chambers, release mechanisms etc.) and controllers **14c** (brake pedal etc.), an air compressor **14a** and a reservoir tank **14r.** The air compressor **14a** is generally driven by the vehicle's propulsion source **12.** The air compressor **14a** pressurizes air from the atmosphere, generating compressed air that is stored in the reservoir tank **14r** (also known as air tank). The reservoir tank **14r** serves as a storage vessel for the compressed air and ensures a steady and reliable air supply to the brake system **14.** Generally, air-controlled brake systems **14** comprise and emergency brake system (not shown in **FIG. 2**) as a safety feature. In the event of a loss of air pressure or other failure in the system, the emergency brake system is automatically activated to engage the brakes and bring the vehicle to a stop. An air-controlled brake system **14** is generally configured such that the brakes **14a** are activated upon release of air pressure, and de-activated by applying air pressure. As an effect, if the compressed air system fails, i.e. no compressed air available, release of the brakes will be prevented and propelling of the vehicle **10** prohibited.

The air-controlled brake system **14** is, in other words, a safety critical feature of vehicles and propulsion of the vehicle without compressed air will not be possible. Consequently, a system may safely rely on the presence of compressed air from the air-controlled brake system **14** during operation of the vehicle **10.**

In order to extend a lifetime and ensure efficiency of the air compressor **14a,** the air compressor **14a** is generally provided with one or more air dryers **14d** arranged to remove moisture and contaminants from the compressed air before it enters the brake system. Air dryers **14d** are typically installed between the air compressor **14a** and the air reservoir **14r.** The air dryer **14d** of the air-controlled brake system **14** may be of any suitable type. One common type of air dryer **14d** uses desiccant materials such as silica gel or activated alumina to absorb moisture from the compressed air. Another type of air dryer **14d** utilizes coalescing filters to remove water droplets and oil mist from the compressed air. These filters consist of fine fibers that capture and trap moisture and oil particles as the air passes through them. Some air dryers **14d** employ heat exchangers to cool the compressed air, causing the moisture to condense and separate from the air stream. The condensed water is then drained out of the system, leaving behind dry, clean air. The air dryer **14d** may very well be a combination of different types of air dryers **14d.**

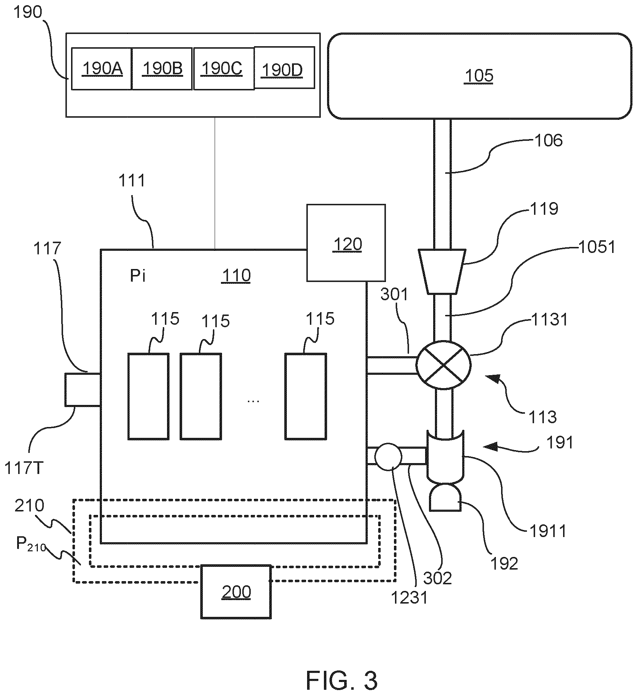

In **FIG. 3**, an exemplary schematic view of an energy source **100** in the form of a battery system **100** is shown. The battery system **100** comprises at least one battery pack **110.** The battery pack **110** may be any suitable battery pack **110** and may comprise one or more battery cells **115.** In **FIG. 3**, the battery system **100** comprises three battery cells **115** but this is for illustrative purposes and the battery system **100** may comprise any number of battery cells **115.** The battery pack **110** further comprises a housing **111** for sealing the battery pack **110.** The housing **111** of the battery pack **110** may be any suitable housing and may be chosen depending on e.g. specific applications, requirements and/or an expected operational environment of the battery pack **110.** In some examples, the housing **111** may be a metal casing, a plastic casing or casing comprised both of metal and plastic or other types of custom enclosures for the battery cells **115.** In some examples, the battery cells **115** may be provide with cell casing (not shown) and such cell casing may correspond to the housing **111** but may be provided as soft or flexible pouches or casings. The teaching of the present disclosure may be applied also to suitable battery cell cases.

The battery pack **110** comprises an inlet **301** and an outlet **302.** The outlet **302** is connected to the inlet **301.** The battery system **100** further comprises a controllable pressure reducing device **191.** The controllable pressure reducing device **191** is connected to the outlet **302** of the battery pack **110** for decreasing the internal pressure **Pi** of the battery pack **110** by controlling the gas discharge from the battery pack **110** through the outlet **302.**

Connected to may herein refer to being in fluid communication with or in fluid connection with. Hence, the inlet **301** and the outlet **302** may be in fluid communication. Accordingly, fluid may pass via the inlet **301** to the outlet **302.**

As will be described in further detail below, the controllable pressure reducing device **191** may be configured to control the gas discharge from the battery pack **110** through the outlet **302.** The controllable pressure reducing device **191** may thus be arranged between the inlet **301** and the outlet **302.** The controllable pressure reducing device **191** may be configured to control fluid flow through the outlet **302.**

The inlet **301** and the outlet **302** may be provided as openings in the housing **111** of the battery pack **110.** Each of the inlet **301** and the outlet **302** may be in fluid communication with the interior of the battery pack **110,** e.g. the interior of the housing **111.** The inlet **301** and the outlet **302** may be in fluid communication with each other via the interior of the battery pack **110,** e.g. the interior of the housing **111,** such that fluid may pass from the inlet **301** to the outlet **302** via the interior of the battery pack **110,** e.g. the interior of the housing **111.**

As will be described in further detail later on, the inlet **301** may be connected to, e.g. in fluid communication with, a pressurized air source. Hence, air may be circulated through the battery pack **110,** e.g. the housing **111** of the battery pack **110,** into the inlet **301** and out through the outlet **302.**

In some examples, the controllable pressure reducing device **191** may be configured to decrease the internal pressure **Pi** in the battery pack **110.** This may be achieved by evacuating thermal runaway gas and/or particles stemming from the thermal runaway in the event of a thermal runaway in the battery pack **110.**

The controllable pressure reducing device **191** may be controllable to cause gas discharge through the outlet **302.** Accordingly, the controllable pressure reducing device **191** may be controllable to generate a negative pressure at the outlet **302.** The negative pressure may cause the gas discharge through the outlet **302** and the decrease in internal pressure **Pi** of the battery pack **110.** In other words, the negative pressure at the outlet **302** may cause a suction of the gas and particles and/or moisture present in the interior of the battery pack **110,** e.g. the housing **111** of the battery pack **110,** out of the battery pack **110** via the outlet **302.**

Optionally, the outlet **302** may be arranged at a vertically low position of the battery pack **110.** Preferably, the outlet **302** may be arranged at a, during use, vertically lower portion of the battery pack **110** to allow draining of moisture from the battery pack **110.** The vertically lower portion may be located at a, during use, bottom half of the battery pack **110.** Preferably, the vertically lower portion may be a vertically lowest portion of the battery pack **110.** Having the outlet **302** at a lower portion of the battery pack **110** (or the housing **111** of the battery pack **110**), allows draining of liquid and moisture from battery pack **110,** i.e. an interior of the housing **111.**

For aiding draining of moisture, the inlet **301** may be arranged at a vertically high position of the battery pack **110.** The inlet **301** may be arranged at a, during use, vertically higher portion of the battery pack **110** compared to the outlet **302.** In one example, the inlet **301** may be located at a, during use, top half of the battery pack **110.**

The controllable pressure reducing device **191** may be provided in the form of any suitable controllable device capable of reducing the internal pressure **Pi** in the battery pack **110** by controlling the gas discharge from the battery pack **110** through the outlet **302.** For example, the controllable pressure limiting device **191** may be provided as a pump connected to the outlet **302** and configured to be operated to cause the gas discharge through the outlet **302.**

In the depicted example, the controllable pressure reducing device **191** may comprise a venturi valve **1911.** Compared to for example a pump or a valve system, the venturi valve **1911** may enable control of the gas discharge in a cost-efficient, robust and non-complex manner. The venturi valve **1911** may be connected to the outlet **302.** The venturi valve **1911** may be configured to be driven by a compressed air source to reduce the internal pressure **Pi** of the battery pack **110.**

The venturi valve **1911** may form a part of the controllable pressure limiting device **191** and may upon being driven by a compressed air source create a negative pressure at the outlet **302** of the battery pack **110.** This negative pressure effectively removes moisture and particulate matter from within the battery pack **110,** thereby decreasing the internal pressure **Pi** and enhancing the overall cleanliness and operational stability of the battery system **110.**

Driven may herein refer to the compressed air source providing an air flow through the venturi valve **1911** causing a negative pressure at the outlet **302** forcing the gas discharge through said outlet **302.** As the skilled person is aware, a venturi valve **1911** commonly comprises an inlet and an outlet in fluid communication with each other. A passage is provided between the inlet and the outlet. The passage may comprise a constriction configured to increase the velocity of the flow and reduce the pressure. The constriction causes a pressure drop between the inlet and the outlet, e.g. the pressure to be higher at the inlet than the outlet of the venturi valve **1911.** A suction port may be connected to the passage, downstream from the inlet. The pressure drop between the inlet and the outlet may thus cause a negative pressure in the suction port forcing fluid in the suction port into the venturi valve **1911,** e.g. into the passage and/or the outlet of the venturi valve **1911.**

To achieve the gas discharge through the outlet **302,** the suction inlet of the venturi valve **1911** may be connected to the outlet **302,** the inlet of the venturi valve may be connected to the compressed air source and the outlet may be connected to a low pressure section, e.g. an exhaust.

Hence, the controllable pressure limiting device **191** may be controlled by means of control of the air flow from the compressed air source through the venturi valve **1911.** This may be achieved by means of control of the air flow to the venturi valve **1911** directly, e.g. by means of control of the compressed air source and/or a pump or compressor associated with the compressed air source, and/or by means of control of a valve arrangement for controlling the air flow to the venturi valve **1911.**

Further referencing **FIG. 3****,** the battery system **100** may further comprise a compressed air supply **105.** The compressed air supply **105** may be connected to the inlet **301.** The compressed air supply **105** may be any type of suitable air supply known in the prior art. For example, the compressed air supply **105** may be any compressed air supply commonly found in a vehicle. Thereby, the battery system **100** will require a minimum of added components for providing the intended functionality.

For example, the compressed air supply **105** may be configured to drive the venturi valve **1911.** The venturi valve **1911** may thus be connected to the compressed air supply **105.** The venturi valve **1911** may be configured to driven by the compressed air supply **105** to reduce the internal pressure **Pi** of the battery pack **110.**

In the depicted example, the compressed air supply **105** may be connectable to the air-controlled brake system **14** of the vehicle **10.** Such an air-controlled brake system **14** commonly include compressed air which may be utilized for controlling the internal pressure **Pi** of the battery pack **110.**

The battery system **100** may comprise an inlet control valve arrangement **113.** The inlet control valve arrangement **113** may be configured to control the flow into the inlet **301** of the battery pack **110.**

The inlet control valve arrangement **113** may be connected to the compressed air supply **105** provided to enable operative connection of the battery pack **110** to a supply of compressed air. The compressed air supply **105** may be connected to an air-controlled brake system **14** such as the air-controlled brake system of **FIG. 2****.** The compressed air supply **105** is preferably connected to an outlet of the reservoir tank **14r** of the air-controlled brake system **14.**

In one example, the inlet control valve arrangement **113** may be configured to control fluid distribution to the inlet **301.** Accordingly, the inlet control valve arrangement **113** may be configured to selectively seal off the inlet **301.** In the depicted example, the inlet control valve arrangement **113** may be configured to control air distribution from the compressed air supply **105** to the inlet **301,** i.e. into the battery pack **110.**

The inlet control valve arrangement **113** may thus comprise a control valve downstream of the compressed air supply **105** and upstream of the inlet **301.** The control valve may configured to control air flow from the compressed air supply **105** to the inlet **301.**

In the depicted example, the inlet control valve arrangement **113** may be configured to control the flow of gas to the venturi valve **1911** to control the internal pressure **Pi** of the battery pack **110.,** e.g. by controlling the discharge through the outlet **302.**

An inlet of the venturi valve **1911** may be connected to the control valve arrangement **113.** An outlet of the venturi valve **1911** may be connected to an exhaust and a suction inlet of the venturi valve **1911** may be connected to the outlet **302** of the battery pack **110.**

In one example, the inlet control valve arrangement **113** may be configured to control fluid distribution to the venturi valve **1911,** e.g. the inlet of the venturi valve **1911.** Accordingly, the inlet control valve arrangement **113** may be configured to selectively seal off the venturi valve **1911** from the compressed air supply **105.** In the depicted example, the inlet control valve arrangement **113** may be configured to control air distribution from the compressed air supply **105** to the venturi valve **1911,** e.g. the inlet of the venturi valve **1911.**

The inlet control valve arrangement **113** may thus comprise a control valve downstream of the compressed air supply **105** and upstream of the venturi valve **1911,** e.g. the inlet of the venturi valve **1911.** The control valve may configured to control air flow from the compressed air supply **105** to the venturi valve **1911,** e.g. the inlet of the venturi valve **1911.**

Further referencing **FIG. 3****,** the battery system **100** may comprise a connecting branch **1051.** The connecting branch **1051** may connect the inlet control valve arrangement **113** and the controllable pressure reducing device **191.**

The inlet control valve arrangement **113** may be configured to operate in an intake state. In the intake state, the inlet control valve arrangement **113** may be configured to enable flow into the battery pack **110.**

The inlet control valve arrangement **113** may be configured to operate in a pressure reduction state. In the pressure reduction state, the inlet control valve arrangement **113** may be configured to enable flow to the controllable pressure reducing device **191** to cause control of the controllable pressure reducing device **191** for reducing the internal pressure **Pi** of the battery pack **110.**

In one example, the inlet control valve arrangement **113** may comprise a three-way valve **1131.** An inlet of the three-way valve **1131** may be connected to the compressed air supply **105,** a first outlet of the three-way valve **1131** may be connected to the inlet **301** and a second outlet of the three-way valve **1131** may be connected to the controllable pressure reducing device **191.** The three-way valve **1131** may be configured to connect the inlet and the first outlet in the intake state and the inlet and the second outlet in the pressure reduction state.

In the depicted example, the inlet control valve arrangement **113** is configured to control air flow to the inlet **301** of the battery pack **110** and air flow to the venturi valve **1911** to cause gas discharge through the outlet **302** of the battery pack **110.** With the three-way valve **1131** this may be performed with a single valve. It may however be envisioned that the inlet control valve arrangement **131** may comprise a plurality of valves to provide the intended control functionality.

In the depicted example, three-wav valve **1131** may be configured to selectively connect the compressed air source **105** to the inlet **301** and/or to the venturi valve **1911,** e.g. the inlet of the venturi valve **1911.**

In the intake state, the inlet control valve arrangement **1131** and preferably the three-way valve **1131,** may be configured to connect the inlet **301** to the compressed air supply **105** to cause air flow into the battery pack **110,** thereby raising the internal pressure **Pi** inside the battery pack **110.** In the intake state, the inlet control valve arrangement **1131** and preferably the three-way valve **1131,** may be configured to seal off the venturi valve **1911**, e.g. the inlet of the venturi valve **1911,** from the compressed air supply.

In the pressure reduction state, the inlet control valve arrangement **1131** and preferably the three-way valve **1131,** may be configured to seal of the inlet **301** from the compressed air supply **105** to prevent air flow into the battery pack **110.** In the pressure reduction state, the inlet control valve arrangement **131** and preferably the three-way valve **1131,** may be configured to connect the venturi valve **1911,** e.g. the inlet of venturi valve **1911,** to the compressed air supply **105** to cause a negative pressure at the outlet **302** and gas discharge through said outlet **302,** thereby reducing the internal pressure **Pi** of the battery pack **110.**

Generally, a pressure of the compressed supply air is greater than a wanted internal pressure **Pi** of the battery pack **110.** To this end, the battery system **100** may comprise a pressure-reducing valve **119** arranged between the compressed air supply **105** and the inlet **301.** The pressure reducing valve **119** may be arranged between the compressed air supply **105** and the housing **111.** Alternatively, or additionally, the inlet control valve arrangement **113** may comprise the pressure-reducing valve **119.** The pressure reducing valve **119** may be configured to reduce a pressure provided via the compressed air supply **105,** e.g. a pressure of the reservoir tank **14r** of the air-controlled brake system **14,** to a lower pressure manageable by housing **111** of the battery pack **110.** In some examples, the pressure may be greater than the ambient pressure **Pa** of the battery pack **110.** The pressure-reducing valve **119** may be any suitable pressure-reducing valve **119** such as, but not limited to direct-acting pressure reducing valves (comparably simple, reliable devices that operate based on the balance between the downstream pressure and a spring force), pilot-operated pressure reducing valves (valves using a pilot valve to control the main valve, providing greater accuracy and sensitivity to changes in pressure where the pilot valve senses the downstream pressure and modulates the main valve to maintain a desired pressure setpoint), diaphragm pressure reducing valves (valves using a flexible diaphragm to control the flow of air and maintain the desired pressure downstream) etc.

In some examples, the pressure-reducing valve **119** and/or the inlet control valve arrangement **113** are controllable; such that the control of the internal pressure **Pi** of the battery pack **110** to be lower and potentially greater than an ambient air pressure **Pa** of the battery pack **110** may be selective. Additionally, or alternatively, the pressure-reducing valve **119** and/or the inlet control valve arrangement **113** may be controllable such that the internal pressure **Pi** of the battery pack **110** may be controlled to a configurable wanted internal pressure **Pi** of the battery pack **110.**

In some examples, the battery pack **110** further comprises a pressure relief valve **117.** The pressure relief valve **117** may be configured to open responsive to the internal pressure **Pi** of the battery pack **110** being above a pressure relief threshold **117T**. The battery system **100** may be configured to control the internal pressure **Pi** of the battery pack **110** to be below the pressure relief threshold **117T**.

The pressure relief valve **117** may be a pressure operated safety valve configured to open at the pressure relief threshold **117T**.

The pressure relief valve **117** is generally provided through the housing **111** of the battery pack **110.** The pressure relief valve **117** may be configured to serve as a safety mechanism to protect the battery pack **110** and surrounding components from damage due to overpressure conditions. Generally, a primary purpose of a pressure relief valve in a battery pack **110** is to prevent the buildup of excessive internal pressure, which can occur during abusive conditions such as overcharging, external short circuits, or thermal runaway. The pressure relief valve **117** is configured to open and allow gases to pass from an inside of the housing **111** to an outside of the housing **111.** The pressure relief valve is configured to open responsive to the internal pressure **Pi** of the battery pack **110** exceeding a pressure relief threshold **117_{T}** of the pressure relief valve **117.** If the battery pack **110** is provided with a pressure relief valve **117,** the inlet control valve arrangement **113** is preferably configured to provide the internal pressure **Pi** of the battery pack **110** to be lower than the pressure relief threshold **117_{T}** and above the ambient air pressure **Pa** of the battery pack **110.**

It should be mentioned that the internal pressure **Pi** of the battery pack **110** may very well be greater than the pressure relief threshold **117_{T}.** This will cause air from the compressed air supply, e.g. the reservoir tank **14r** of the air-controlled brake system **14,** to enter the housing **111** through the inlet **301** and escape the housing **111** through the pressure relief valve **117.** This allows exchange of air inside the battery pack **110** and evacuation of e.g. moisture, contaminants etc. from the battery pack **110.** In some examples, the pressure-reducing valve **119** and/or the inlet control valve arrangement **113** controllable as mentioned above; and the controllable pressure-reducing valve **119** and/or the controllable inlet control valve arrangement **113** may be controlled to selectively provide the internal pressure **Pi** of the battery pack **110** to be lower than the pressure relief threshold **117_{T}** and above the ambient air pressure **Pa** of the battery pack **110,** or above the pressure relief threshold **117_{T}.** This provides selective evacuation of air from the battery pack **111.**

Although the functionality of the battery system **100** outlined above may be provided wholly by hardware components such as valves etc., control of these valves may, as indicated above, in some examples be configurable. To this end, the battery system **100** may further comprise (or be operatively connected to) processing circuitry **120.** The processing circuitry **120** may be any suitable processing circuitry configured to control the internal pressure **Pi** of the battery pack **110.**

The processing circuitry **120** may be configured to control the internal pressure **Pi** to decrease in response to identifying a gas discharging trigger event. The processing circuitry **120** may thus be configured to obtain gas discharging trigger data and in response to said gas discharging trigger data control the internal pressure **Pi** to decrease. This may be performed by means of the controllable pressure reducing device **191** and/or control of the inlet control valve arrangement **113.**

In one example, the gas discharging trigger event may comprise a gas discharging instruction. The gas discharging instruction may be initiated by an operator, e.g. user. The processing circuitry **120** may thus be configured to be operatively connected to a user interface forming a part of the vehicle **10** or being arranged external to the vehicle **10.** The gas discharging instruction may be received via the user interface.

In one example, the processing circuitry **102** may configured to identify a gas discharging trigger event based on sensor data associated with the battery pack **110.** The battery system **100** may comprise one or more battery pack sensors **190** for this purpose.

The one or more battery pack sensors **190** may be operatively connected to the processing circuitry **120.** The one or more battery pack sensors **190** may be configured to monitor one or more parameter relating to the battery pack **110.** The processing circuitry **120** may be configured to obtain sensor data from the one or more battery pack sensors **190.** The processing circuitry **190** may be configured to identify a gas discharging trigger event based on a value of the sensor data exceeding a threshold value.

The one or more battery pack sensor **190** may comprise one or more of a thermal runaway sensor **190A,** a temperature sensor **190B,** a pressure sensor **190C** and a moisture sensor **190D.** The one or more battery pack sensor **191** may be arranged inside the housing **111** of the battery pack **110.**

The thermal runaway sensor **190A** may be a particle or gas sensor configured to detect particles or gas associated with a thermal runaway inside the battery pack **110,** e.g. inside the housing **111.** Thus, the processing circuitry **120** may be configured to identify a gas discharging trigger event in response to the sensor data obtained from the thermal runaway sensor **190A** indicating a detection of particles or gas associated with a thermal runaway.

The temperature sensor **190B** may be configured to measure the temperature inside of the battery pack **110,** e.g. the inside the housing **111** of the battery pack **110.** Thus, the processing circuitry **120** may be configured to identify a gas discharging trigger event in response to the temperature in the battery pack **110** exceeding certain levels indicating either a thermal runaway or excessive heat accumulation inside the battery pack **110.**

The pressure sensor **190C** may be configured to measure the pressure inside of the battery pack **110,** e.g. the inside the housing **111** of the battery pack **110.** Advantageously, the pressure sensor **190C** may be configured to measure the internal pressure **Pi** of the battery pack **110.** The processing circuitry **120** may be configured to identify a gas discharging trigger event in response to the pressure in the battery pack **110** exceeding certain levels indicating either a thermal runaway or excessive pressure accumulation inside the battery pack **110.**

The moisture sensor **190D** may be configured to measure the moisture inside of the battery pack **110,** e.g. the inside the housing **111** of the battery pack **110.** Thus, the processing circuitry **120** may be configured to identify a gas discharging trigger event in response to the moisture in the battery pack **110** exceeding certain levels indicating for example condensation or coolant leakage inside the battery pack **110.**

The processing circuitry **120** may be configured to control the gas discharge through the outlet **302** by means of controlling the pressure reducing device **191** and/or by controlling the compressed air source, e.g. the compressed air supply **105** and/or the inlet control valve arrangement **113.**

The processing circuitry **120** may be configured to control the internal pressure **Pi** of the battery pack **110** by controlling the compressed air supply **105,** the pressure reducing valve **119,** the inlet control valve arrangement **130** and/or the controllable pressure limiting device **191.** The processing circuitry **120** may be configured to reduce the internal pressure **Pi** of the battery pack **110** by controlling the gas discharge from the outlet **302** by controlling the compressed air supply **105,** the pressure reducing valve **119,** the inlet control valve arrangement **130** and/or the controllable pressure limiting device **191.**

It should be mentioned that the battery pack **110** may very well comprise further devices and/or features such as, but not limited to, one or more controllers, sensors, connectors, further safety features etc.

As aforementioned, the processing circuitry **120** may also be configured to cause the internal pressure of the battery pack **110** to be above the ambient air pressure **Pa** in other operational states. The processing circuitry **120** may be configured to control the compressed air supply **105,** the pressure reducing valve **119,** the inlet control valve arrangement **130** and/or the controllable pressure limiting device **191** to increase the pressure **Pi** above an ambient air pressure **Pa.** In some examples, the processing circuitry **120** is operatively connected to the air-controlled brake system **14** and configured to control the air-controlled brake system **14** to provide the internal pressure **Pi** of the battery pack **110.**

Some battery packs **110,** specifically high-performance battery packs, such as those used in electric vehicles or grid-scale energy storage, often incorporate connections to a cooling systems **200** at their housing **111** to manage temperature and optimize performance and lifespan of the battery pack **110.** The cooling system **200** may by an external cooling system **200** such as shown in **FIG. 3****,** or integrated within the housing **111.** The cooling system **200** of **FIG. 3** is a liquid cooling system comprising coolant lines **210** connected to the battery pack **110.** The coolant lines **210** function as conduits for coolant with which the battery pack **110** may exchange heat. Coolant lines **210** may extend through the housing **111** of the battery pack **110** and/or be connected/arranged in a vicinity of the battery pack **110.** The coolant lines **210** may comprise, be formed as, and/or connected to heat exchangers (e.g. cooling plates) arranged to exchange heat with the battery pack **110.** Additionally, or alternatively, coolant lines **210** and/or heat exchangers may be incorporated in the housing **111** of the battery pack **110.** A battery pack **110** connected to, or comprising, liquid cooling system **200** is referred to as a liquid-cooled battery pack **110.** A battery pack **110** connected to a cooling system **200** providing liquid-cooling may be referred to as a liquid-cooled battery pack **110.**

Accordingly, the battery system **100** may be configured to operate in a raised pressure operational mode. In the raised pressure operational mode, the battery system **100** may be configured to control the internal pressure **Pi** of the battery pack **110** to be greater than the ambient air pressure **Pa.**

Providing an internal pressure **Pi** of the battery pack **110** to be above an ambient air pressure **Pa** of the battery pack **110** will prevent contaminants, moisture etc. to leak into the battery pack **110** if the housing **111** is damaged. Further to this, in case of a liquid-cooled battery pack **110,** if the coolant lines **210** of a liquid cooling system **200** are damaged, coolant will be prevented from leaking into the battery pack **110.** If walls of the coolant lines **210** form walls of the housing **110,** air may leak into the liquid cooling system **200** rather than coolant leaking into the battery pack **110.** Air in the cooling system **200** is generally easier to detect and less hazardous than coolant inside the battery pack **110.** It should be mentioned that, in cases where the walls of the coolant lines **210** form walls of the housing **110,** the high pressure inlet valve **113** is preferably configured to provide the internal pressure **Pi** of the battery pack above an internal pressure of the coolant lines **P₂₁₀,** specifically if the internal pressure of the coolant lines **P₂₁₀** is greater than the ambient air pressure **Pa** of the battery pack **110** which is generally the case.

In one example, the battery system **100** may comprise an outlet control valve **1231.** The outlet control valve **1231** may be configured to control fluid flow out of the outlet **302.** The outlet control valve **1231** may be operatively connected to the processing circuitry 120. The processing circuitry **120** may be configured to control said outlet control valve **1231.** In the raised pressure operational mode, the outlet control valve **1231** may be configured to seal off the outlet **302.** In the raised pressure operational mode, the outlet control valve **1231** may thus be configured to enable the internal pressure **Pi** to increase. Although the outlet control valve **1231** is not required for the function of the pressure reduction state, the outlet control valve **1231** may be configured to enable fluid discharge via the outlet **302** in said pressure reduction state.

Referencing the depicted example, the processing circuitry **120** may be operatively connected to the inlet control valve arrangement **113.** The processing circuitry **120** may be configured to in response to identifying a gas discharge trigger event, control the inlet control valve arrangement **113** to operate in the pressure reduction state. As aforementioned, this may include sealing off the inlet **301** from the compressed air source **105** and enabling air flow from the compressed air source **105** to the venturi valve **1911.**

Further referencing the depicted example, the processing circuitry may responsive to not identifying a gas discharge trigger event, control the inlet control valve arrangement **113** to operate in the intake state. As aforementioned, this may include enabling air flow from the compressed air source **105** to the venturi valve **1911** and sealing off the venturi valve **1911** from said compressed air source **105.**

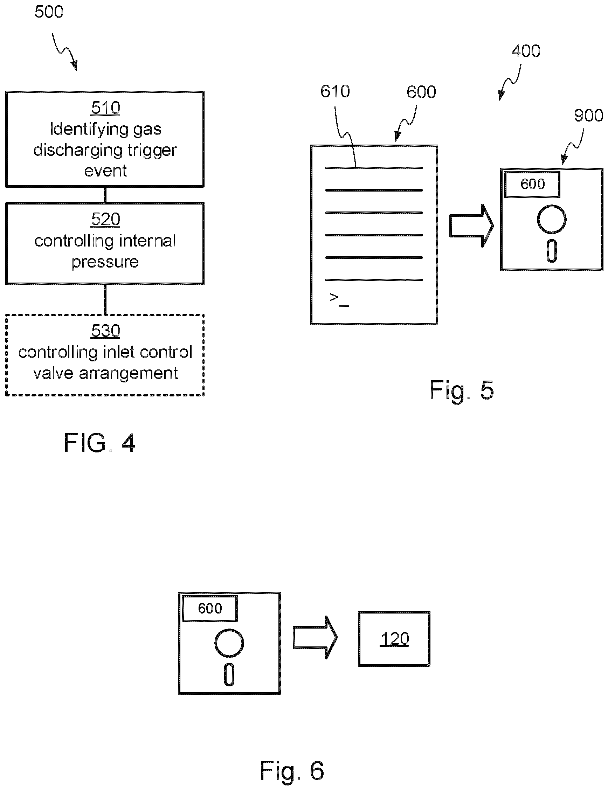

With reference to **FIG. 4****,** a schematic view of a method **500** according to the present disclosure is shown. The method **500** may be a partly or wholly computer implemented method **500.** The processing circuitry **120** of the battery system **100** or processing circuitry of the vehicle **10** operatively connected to the battery system **100** may be configured to perform and/or cause performance of some or all features of the method **500.**

The method **500** may be described as a method **500** for decreasing an internal pressure **Pi** of a battery pack **110** by controlling the internal pressure **Pi** of the battery pack **110** by reducing the internal pressure **Pi** and controlling the gas discharge from the outlet **302** of the battery pack **110.** The method **500** may comprise causing control of the controllable pressure reducing device **191** to reduce the internal pressure **Pi** in the battery pack **110.** Advantageously, the method **500** may comprise reducing the internal pressure **Pi** to be below the ambient air pressure **Pa.** In some embodiments, the method **500** may comprise reducing the internal pressure **Pi** to be at the ambient air pressure **Pa.**

In the depicted example, the method comprises identifying **510** a gas discharging trigger event and responsive to identifying said gas discharging trigger event controlling **520** the internal pressure **Pi** of the battery pack **110** by reducing the internal pressure **Pi** and controlling the gas discharge from the outlet **302** of the battery pack **110.**

Controlling **520** the internal pressure **Pi** may be accomplished according to any example, feature or function presented herein, e.g. with reference to **FIG. 3****.**

Optionally, in some examples, specifically examples wherein the battery system 100 comprises the previously introduced inlet control valve arrangement **310,** the method **500** may further comprise controlling **530** the inlet control valve arrangement **330** to controllably release gas from the outlet **302** of the battery pack **110.** Controlling **530** the inlet control valve arrangement **310** may be accomplished according to any example, feature or function presented herein, e.g. with reference to **FIG. 3****.**

The method **500** introduced with reference to **FIG. 5** may be modified to comprise any or all features, examples or functionality presented herein.

In **FIG. 5** a computer program product **400** is shown. The computer program product **400** comprises a computer program **600** and a non-transitory computer readable medium **900.** The computer program **600** may be stored on the computer readable medium **900.** The computer readable medium **900** is, in **FIG. 6****,** exemplified as a vintage 5,25" floppy disc, but may be embodied as any suitable non-transitory computer readable medium such as, but not limited to, hard disk drives (HDDs), solid-state drives (SSDs), optical discs (e.g., CD-ROM, DVD-ROM, CD-RW, DVD-RW), USB flash drives, magnetic tapes, memory cards, Read-Only Memories (ROM), network-attached storage (NAS), cloud storage etc.

The computer program **600** comprises instruction **610** e.g. program instruction, software code, that, when executed by processing circuitry cause the processing circuitry to perform the method **500** introduced with reference to **FIG. 5****.**

As illustrated in **FIG. 6****,** the computer program **600** may be loaded onto the processing circuitry **120** of the battery system **100.**

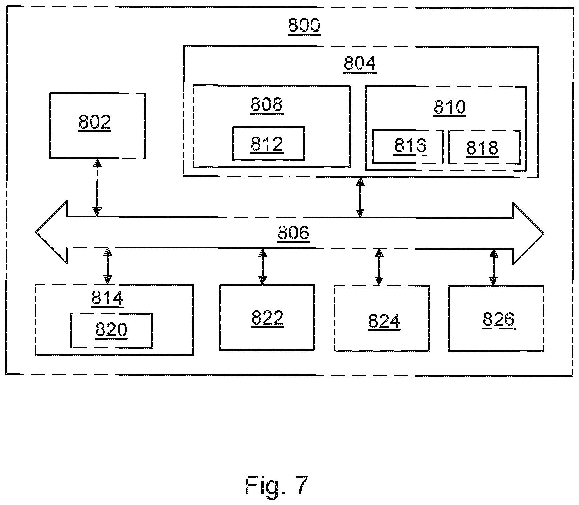

**FIG. 7** is a schematic diagram of a computer system **800** for implementing examples disclosed herein. The computer system **800** is adapted to execute instructions from a computer-readable medium to perform these and/or any of the functions or processing described herein. The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **800** may comprise at least one computing device or electronic device capable of including firmware, hardware, and/or executing software instructions to implement the functionality described herein. The computer system **800** may include processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of specific examples of embodiments of the present invention are presented. However, the scope of protection is defined in the appended independent claims with preferred embodiments defined in the dependent claims related thereto.

Example 1: A battery system (100) comprising a battery pack (110) comprising an inlet (301) and an outlet (302) connected to the inlet (301), the battery system (100) further comprising a controllable pressure reducing device (191) connected to the outlet (302) of the battery pack (110) for decreasing the internal pressure (Pi) of the battery pack (110) by controlling the gas discharge from the battery pack (110) through the outlet (302).

Example 2: The battery system (100) of Example 1, further comprising processing circuitry (120) configured to control the internal pressure (Pi) of the battery pack (110).

Example 3: The battery system (100) of Example 2, wherein the processing circuitry (120) is configured to control the internal pressure (Pi) to decrease responsive to identifying a gas discharging trigger event.

Example 4: The battery system (100) of Example 3, wherein the gas discharging trigger event comprises a gas discharging instruction initiated by an operator.

Example 5: The battery system (100) of any of Examples 2-4, wherein the battery system (100) further comprises one or more battery pack sensor (190) operatively connected to the processing circuitry (120) and configured to monitor one or more parameter relating to the battery pack (110), wherein the processing circuitry (120) is configured to obtain sensor data from the one or more battery pack sensor (190) and identify a gas discharging trigger event based on a value of the sensor data exceeding a threshold value.

Example 6: The battery system (100) of Example 5, wherein the one or more battery pack sensor (190) comprises one or more of a thermal runaway sensor (190A), a temperature sensor (190B), a pressure sensor (190C) and a moisture sensor (190D).

Example 7: The battery system (100) of any of Examples 1-6, wherein the controllable pressure reducing device (191) is configured to decrease the internal pressure (Pi) in the battery pack (110) by evacuating thermal runaway gas in the event of a thermal runaway in said battery pack (110).

Example 8: The battery system (100) of any of Examples 1-7, further comprising a compressed air supply (105) connected to the inlet (301).

Example 9: The battery system (100) of Example 8, wherein the compressed air supply (105) is connectable to an air-controlled brake system (14) of a vehicle (10).

Example 10: The battery system (100) of any of Examples 8-9, further comprising a pressure reducing valve (119) arranged between the inlet (301) of the battery pack (110) and the compressed air supply (105).

Example 11: The battery system (100) of any of Examples 8-10, wherein the battery system (100) is further configured to operate in a raised pressure operational mode wherein the battery system (100) is configured to control the internal pressure (Pi) of the battery pack (110) to be greater than the ambient air pressure (Pa).

Example 12: The battery system (100) of any of Examples 1-11, wherein the battery pack (110) further comprises a pressure relief valve (117) configured to open responsive to the internal pressure (Pi) of the battery pack (110) being above a pressure relief threshold (117T), and the battery system (100) is configured to control the internal pressure (Pi) of the battery pack (110) to be below the pressure relief threshold (117T).

Example 13: The battery system (100) of Example 12, wherein the pressure relief valve (117) is a pressure operated safety valve configured to open at the pressure relief threshold (117T).

Example 14: The battery system (100) of any of Examples 1-13, wherein the outlet (302) is arranged at a, during use, vertically lower portion of the battery pack (110) to allow draining of moisture from the battery pack (110), the vertically lower portion being located at a, during use, bottom half of the battery pack (110).

Example 15: The battery system (100) of any of Examples 1-14, wherein the battery pack (110) is a liquid-cooled battery pack (110).

Example 16: The battery system (100) of any of Examples 1-15, wherein the controllable pressure reducing device (191) comprises a venturi valve (1911) connected to the outlet (302) and configured to be driven by a compressed air source to reduce the internal pressure (Pi) of the battery pack (110).

Example 17: The battery system (100) of Example 16 when dependent on Example 8, wherein the venturi valve (1911) is connected to the compressed air supply (105) and configured to be driven by said compressed air supply (105) to reduce the internal pressure (Pi) of the battery pack (110).

Example 18: The battery system (100) of any of Examples 1-17, further comprising an inlet control valve arrangement (113) configured to control the flow into the inlet (301) of the battery pack (110).

Example 19: The battery system (100) of Example 18, wherein the inlet control valve arrangement (113) is further configured to control the flow of gas to the venturi valve (1911) to control the internal pressure (Pi) of the battery pack (110).

Example 20: The battery system (100) of Example 19, wherein an inlet of the venturi valve (1911) is connected to the control valve arrangement (113), an outlet of the venturi valve (1911) is connected to an exhaust and a suction inlet of the venturi valve (1911) is connected to the outlet (302) of the battery pack (110).

Example 21: The battery system (100) of any of Examples 18-20, further comprising a connecting branch (1051) connecting the inlet control valve arrangement (113) and the controllable pressure reducing device (191), the inlet control valve arrangement (113) being configured to operate in an intake state in which the inlet control valve arrangement (113) is configured to enable flow into the battery pack (110), the inlet control valve arrangement (113) being further configured to operate in a pressure reduction state wherein the inlet control valve arrangement (113) is configured to enable flow to the controllable pressure reducing device (191) to cause control of the controllable pressure reducing device (191) for reducing the internal pressure (Pi) of the battery pack (110).

Example 22: The battery system (100) of Example 21, wherein the inlet control valve arrangement (113) comprises a three-way valve (1131), wherein an inlet of the three-way valve (1131) is connected to the compressed air supply (105), a first outlet of the three-way valve (1131) is connected the inlet (301) and a second outlet of the three-way valve (1131) is connected to the controllable pressure reducing device (191), wherein the three-way valve (1131) is configured to connect the inlet and the first outlet in the intake state and the inlet and the second outlet in the pressure reduction state.

Example 23: The battery system (100) of Example 1, further comprising processing circuitry (120) configured to control the internal pressure (Pi) of the battery pack (110), wherein the processing circuitry (120) is configured to control the internal pressure (Pi) to decrease responsive to identifying a gas discharging trigger event, wherein the battery system (100) further comprises one or more battery pack sensor (190) operatively connected to the processing circuitry (120) and configured to monitor one or more parameter relating to the battery pack (110), wherein the processing circuitry (120) is configured to obtain sensor data from the one or more battery pack sensor (190) and identify a gas discharging trigger event based on a value of the sensor data exceeding a threshold value, wherein the one or more battery pack sensor (190) comprises one or more of a thermal runaway sensor (190A), a temperature sensor (190B) and a pressure sensor (190C) and the controllable pressure reducing device (191) is configured to decrease the internal pressure (Pi) in the battery pack (110) by evacuating thermal runaway gas in the event of the sensor data indicating a thermal runaway in said battery pack (110).

Example 24: A vehicle (10) comprising a battery system (100) of any of Examples 1-23.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery system (100) comprising a battery pack (110) comprising an inlet (301) and an outlet (302) connected to the inlet (301), the battery system (100) further comprising a controllable pressure reducing device (191) connected to the outlet (302) of the battery pack (110) for decreasing the internal pressure (Pi) of the battery pack (110) by controlling the gas discharge from the battery pack (110) through the outlet (302).

2. The battery system (100) of claim 1, further comprising processing circuitry (120) configured to control the internal pressure (Pi) of the battery pack (110).

3. The battery system (100) of claim 2, wherein the processing circuitry (120) is configured to control the internal pressure (Pi) to decrease responsive to identifying a gas discharging trigger event.

4. The battery system (100) of claim 3, wherein the battery system (100) further comprises one or more battery pack sensor (190) operatively connected to the processing circuitry (120) and configured to monitor one or more parameter relating to the battery pack (110), wherein the processing circuitry (120) is configured to obtain sensor data from the one or more battery pack sensor (190) and identify a gas discharging trigger event based on a value of the sensor data exceeding a threshold value.

5. The battery system (100) of any of claim 1-4, wherein the controllable pressure reducing device (191) is configured to decrease the internal pressure (Pi) in the battery pack (110) by evacuating thermal runaway gas in the event of a thermal runaway in said battery pack (110).

6. The battery system (100) of any of claims 1-5, further comprising a compressed air supply (105) connected to the inlet (301).

7. The battery system (100) of claim 6, wherein the battery system (100) is further configured to operate in a raised pressure operational mode wherein the battery system (100) is configured to control the internal pressure (Pi) of the battery pack (110) to be greater than the ambient air pressure (Pa).

8. The battery system (100) of any of claims 1-7, wherein the battery pack (110) further comprises a pressure relief valve (117) configured to open responsive to the internal pressure (Pi) of the battery pack (110) being above a pressure relief threshold (117T), and the battery system (100) is configured to control the internal pressure (Pi) of the battery pack (110) to be below the pressure relief threshold (117T).

9. The battery system (100) of any of claims 1-8, wherein the controllable pressure reducing device (191) comprises a venturi valve (1911) connected to the outlet (302) and configured to be driven by a compressed air source to reduce the internal pressure (Pi) of the battery pack (110).

10. The battery system (100) of claim 9 when dependent on claim 6, wherein the venturi valve (1911) is connected to the compressed air supply (105) and configured to be driven by said compressed air supply (105) to reduce the internal pressure (Pi) of the battery pack (110).

11. The battery system (100) of any of claims 1-10, further comprising an inlet control valve arrangement (113) configured to control the flow into the inlet (301) of the battery pack (110).

12. The battery system (100) of claim 11, wherein the inlet control valve arrangement (113) is further configured to control the flow of gas to the venturi valve (1911) to control the internal pressure (Pi) of the battery pack (110).

13. The battery system (100) of claim 12, wherein an inlet of the venturi valve (1911) is connected to the control valve arrangement (113), an outlet of the venturi valve (1911) is connected to an exhaust and a suction inlet of the venturi valve (1911) is connected to the outlet (302) of the battery pack (110).

14. The battery system (100) of claim 1, further comprising processing circuitry (120) configured to control the internal pressure (Pi) of the battery pack (110), wherein the processing circuitry (120) is configured to control the internal pressure (Pi) to decrease responsive to identifying a gas discharging trigger event, wherein the battery system (100) further comprises one or more battery pack sensor (190) operatively connected to the processing circuitry (120) and configured to monitor one or more parameter relating to the battery pack (110), wherein the processing circuitry (120) is configured to obtain sensor data from the one or more battery pack sensor (190) and identify a gas discharging trigger event based on a value of the sensor data exceeding a threshold value, wherein the one or more battery pack sensor (190) comprises one or more of a thermal runaway sensor (190A), a temperature sensor (190B) and a pressure sensor (190C) and the controllable pressure reducing device (191) is configured to decrease the internal pressure (Pi) in the battery pack (110) by evacuating thermal runaway gas in the event of the sensor data indicating a thermal runaway in said battery pack (110).

15. A vehicle (10) comprising a battery system (100) of any of claims 1-14.
